# EUROPEAN PATENT SPECIFICATION

(11) **EP 3 039 374 B1**
(45) Date of publication and mention of the grant of the patent: **13.02.2019**
(21) Application number: 14840129.2
(22) Date of filing: 28.08.2014
(51) Int. Cl.: F41A 21/02, F41A 21/20

(54) **HIGH TEMPERATURE COMPOSITE PROJECTILE BARREL**
HOCHTEMPERATUR-VERBUNDGESCHOSSLAUF
FÛT DE PROJECTILE COMPOSITE À HAUTE TEMPÉRATURE

(30) Priority: 28.08.2013 US 201361871154 P; 04.09.2013 US 201361873771 P
(43) Date of publication of application: 06.07.2016
(73) Proprietor: Proof Research, Inc., Columbia Falls, MT 59912 (US)
(72) Inventor: CURLISS, David B., Beavercreek, OH 45440 (US); LINCOLN, Jason E., Miamisburg, OH 45342 (US); DEGERNESS, Michael K., Whitefish, MT 59937 (US)
(74) Representative: Higgs, Jonathan
(86) International application number: PCT/US2014/053194
(87) International publication number: WO 2015/031635

(56) References cited:
- WO-A2-2007/130979
- US-A- 2 847 786
- US-A- 3 517 585
- US-A- 5 789 064
- US-A1- 2005 268 517
- US-A1- 2006 135 655
- US-A1- 2010 304 119
- US-A1- 2011 162 246
- US-A1- 2011 173 864

## Description

### CROSS REFERENCE TO RELATED APPLICATIONS

This application claims priority to two Provisional Patent Applications: No. 61/871,154 filed August 28, 2013 and No. 61/873,771 filed September 4, 2013.

### BACKGROUND OF THE INVENTION

Users have long desired lighter gun systems that remain durable and reliable. It is known to substitute relatively strong but lightweight materials - such as unreinforced and reinforced polymers, continuous glass fiber or carbon fiber composites - for various portions of the gun commonly fabricated from steel, aluminum, or other metals. Attention has focused on gun barrels, which constitute a large percentage of a gun's weight. It is known, for example, to fabricate a gun barrel having a steel inner liner surrounded by a carbon fiber reinforced polymer matrix composite (PMC) outer shell, incorporating a resin. This combination lightens the gun while retaining good barrel strength and stiffness.

The carbon fibers used in the PMC outer shell may be any type that provides the desired stiffness, strength and thermal conductivity. Typically for PMC gun barrel applications, polyacrylonitrile ("PAN") precursor or pitch precursor carbon fibers are used. The carbon fiber may be applied as dry carbon fiber strands or tows which are combined with a resin in a "wet" dip pan process, then wound around the inner liner. Alternatively, the shell may be built from carbon fiber tow, unidirectional tape, or fabric that was previously impregnated with resin in a separate process ("towpreg" or "prepreg"), then applied to the inner liner. Whether applied wet or dry, the matrix resin is typically an epoxy. The composite barrel may then be cured, finished, and attached to a receiver and stock. Such carbon fiber / epoxy resin matrix composites can provide a suitable balance of thermal properties, mechanical properties, and processing characteristics for many common firearms applications.

When a composite barrel is subjected to high heat from rapid or prolonged firing, however, they are usually less durable than solid steel barrels. Temperatures within the barrel of a semi-automatic or an automatic rifle, for example, can easily exceed 260° C (500° F), and may exceed 371 °C (700° F) or higher. Firearms made with barrels manufactured entirely from steel and similar materials are durable and have a sufficiently high heat transfer characteristics to dissipate heat quickly enough to accommodate such firing applications and still perform acceptably. Existing gun barrel composite shells have lower thermal conductivity in the radial direction than steel, such that the composite material effectively acts like a heat insulator. Types of steel typically used in gun barrels have a thermal conductivity of about 20-40 watts/meter-Kelvin (20-40 W/m·K). A typical PAN carbon fiber epoxy composite has a thermal conductivity of only about 0.5 W/m·K in the "through thickness" direction, or radial direction in a gun barrel application. Typical values for the "in plane" (the fiber direction) for these composites are on the order of only 1-5 W/m·K. As discussed below, PMC materials also degrade at lower temperatures than steel.

U.S. 6,889,464 (Degerness) disclosed a gun barrel comprising a steel inner liner helically wound with carbon fiber filaments, or tows, drawn through a wet epoxy resin mixture in a dip pan bath process. Degerness added thermally conductive material to the epoxy resin comprising chopped/milled pitch carbon fibers, commercially available as Thermalgraph®. The cured barrel exhibited significantly higher thermal conductivity and improved heat dissipation from the inner barrel through the PMC to the ambient atmosphere. Even with the addition of thermally conductive chopped carbon pitch, however, rapidly firing a gun fitted with a carbon fiber composite barrel may cause barrel temperatures to significantly exceed the use-temperature capability of epoxy resins. As the barrel heats due to prolonged firing, it can exceed the glass transition temperature, T_{g}, of the cured epoxy-based resin mixture. At the T_{g}, the PMC softens significantly and the mechanical integrity of the composite barrel is compromised. As the barrel is heated to even higher temperatures irreversible thermal decomposition of the cured epoxy matrix occurs and barrel structural integrity is further compromised. Epoxy resins having desirable processing characteristics and cured thermal and mechanical properties typically exhibit a glass transition temperature in the range of 60-204° C (140-400°F), and typically exhibit thermal decomposition at temperatures above 260° C (500°F).

Another gun barrel is disclosed in US2011/173864.

Further gun barrels are disclosed in US3517585 and US2847786.

Theoretically, it should be possible to improve thermal conductivity in the PMC and retard heat buildup by increasing the proportion of Thermalgraph or of other thermally conductive material(s) in the resin mixture, such as graphene, graphite, carbon nanotubes, ceramic particles or metal particles. The desirable characteristics for a thermally conductive additive are high thermal conductivity, low density, and of appropriate size and size distribution to occupy spaces between the reinforcing fibers. Because all of these thermally conductive additives tend to strongly increase the viscosity of the resin, however, higher concentrations of the thermally conductive additive make the resin mixture more viscous, inhibiting complete coating of the carbon fiber tow with resin and making manufacturing more difficult and less consistent. Additionally, high loadings of conductive additives generally diminish the mechanical properties (e.g., strength) of the composite.

Other resins having higher glass transition temperatures than epoxy exist, but they are generally more difficult to process and manufacture PMC articles with and are significantly more expensive than epoxies. It is known that resins having polyimide chemistry have significantly higher glass transition temperatures, better thermal conductivity, and improved thermal stability in comparison with epoxy resins. Although cured polyimide resins have superior thermal performance as compared to epoxy resins, many have relatively high toxicity from the solvents and monomers used in their manufacture. In general, the thermoset class of polyimide resins that comprise reactive monomers in a solvent are known as "Polymerizable Monomer Reactant" or PMR polyimides. A claimed lower toxicity polyimide resin was disclosed in U.S. 5,171,822 (Pater) "Low Toxicity High Temperature PMR Polyimide," and is commercially available under the name RP46. The RP46 resin, however, at high enough solids concentration for manufacturing PMCs is semi-solid at room temperature; its high viscosity makes it very difficult to work with when "wet" winding fiber filament tows. A PMR polyimide resin having a higher glass transition temperature than epoxy and useful processing characteristics was disclosed in U.S. 6,889,464 (Lincoln). A resin incorporating the Lincoln chemistry is manufactured by Performance Polymer Solutions, Inc., 2711 Lance Drive, Moraine, Ohio 45409, under the name P²SI® 635LM. The P²SI 635LM resin has a suitably high glass transition temperature of 335° C (635° F), but is also significantly more viscous at room temperature than typical wet filament winding epoxy resins, seemingly precluding its use in filament winding applications, such as when attempting to wind resin-infused fiber tows in multiple layers upon an inner liner of a gun barrel.

Another obstacle to using polyimide resins such as the P²SI® 635LM resin in filament winding applications relates to processing difficulties to cure a freshly-wound barrel. When curing polyimide matrix carbon fiber composite wound barrel comprising a solvated polyimide resin, volatiles in the resin are released. When curing flat or large radius panels, these gasses more easily migrate to the surface or edges of the panel, making it easier to produce a composite article substantially free of undesirable voids. When curing a wound gun barrel that inherently has minimal part "edges", however, it has proven difficult to remove the volatile products and gasses because they tend to become trapped between the continual filament windings. Unlike curing a panel having large planar surfaces, the migration path for volatile gasses released from a freshly wound polyimide resin composite gun barrel is in the radial direction outward through the thickness of the composite (with some longitudinal migration). This problem is compounded when utilizing the higher viscosity polyimide resins. Despite the advantages of using a polyimide resin to wrap a thin cylinder such as a small caliber gun barrel, use of polyimide resins for PMCs - even with alternative composite manufacturing techniques such prepreg, towpreg, and resin transfer infusion - has been substantially confined to flat or relatively large radius carbon fiber sheets or panels.

Another resin class having a relatively high glass transition temperature is polyetheretherketone (PEEK). PEEK is significantly more expensive than epoxies. Further, the glass transition temperature of PEEK is only about 143° C (290° F), with (even more costly) higher-temperature formulations exhibiting glass transition at about 157° C (315° F). These glass transition temperatures are still lower than desirable in a rapid-fire weapon. PEEK is also a thermoplastic material, meaning it is a high molecular weight polymer. It is processed in a melted state at a temperature well above its T_{g} (typically at 371° C (∼700°F)) to achieve flow and consolidation, thus it is applied hot and cools to a rigid structural state. Typical epoxies and PMR polyimides, on the other hand, are thermoset materials, meaning they are typically applied as low viscosity monomeric resins at or near room temperature and are subsequently cured for a period of time, often under elevated temperature and/or pressure conditions to form a densely cross-linked high molecular weight structural material. Thermoplastic resins such as PEEK require very different manufacturing techniques and equipment than thermoset resins.

Thermal conduction within the PMC tends to be strongly affected by the orientation of fiber, being higher in the longitudinal direction of a filament than transversely across. Depending on which specific carbon fiber is used, thermal conductivity of a PAN fiber, for example, could be higher than steel (about 20-40 W/m·K) in the longitudinal direction, but less than 10 W/ m·K in the transverse or radial direction. The resin between the fibers in the cured PMC is even less thermally conductive than the transverse thermal conductivity of the fibers. When a PMC is used as an outer shell for a barrel, solving the heat problem is difficult because most heat must be conducted radially to the outside surface of the barrel and ambient atmosphere, through the composite shell, requiring heat to transfer through resin and transversely across individual fibers.

Thermal conductivity is affected not only by the type of resin, fibers, and any additive(s) and their relative proportions, but also by the size of the fibers and size of additive particles. For example, a typical individual PAN carbon fiber might have a diameter between about 5 and 10 microns. A carbon fiber filament tow comprises a plurality of fibers, with a tow typically used for a gun barrel application having about 6,000 to 24,000 individual fibers. After the resin-coated carbon fiber tow is wound around the barrel and cured, the resin will bond all the continuous reinforcing fibers together to provide mechanical integrity and durability. Ideally the cured resin will fill essentially all of the space between the individual carbon fibers. The volume or space between the individual carbon fibers - referred to as the "unoccupied volume or space," the "inter-fiber volume," or the "interstitial space" interchangeably - is thus ideally occupied by cured resin in the PMC. At the micro level (*i.e.,* the scale of the fiber diameter, approximately 10 microns), significant obstacles to transferring heat from the hot steel inner barrel through the PMC are the lower thermal conductivity of the resin between the fibers, heat transfer resistance at the polymer matrix-fiber interface, and heat transfer resistance at the polymer additive particle interface.

The effect of the thermally conductive filler particle on resin viscosity depends on many factors such as size, size distribution, shape, and interactions of the particles with each other and the resin. Ideally, an effective presence of the thermally conductive additive would be uniformly dispersed with the resin mixture throughout the interstitial space. However, the interstitial space is not uniform; the space may range from, for example, from about <1 micron to about 50 microns. Therefore, effective quantities of particles sized small enough to occupy the smaller interstitial spaces will tend to make the resin mixture too viscous, and may locally weaken the matrix if/where the smaller additive particles "clump" in the larger interstitial spaces. On the other hand, if the thermally conductive material particles are sized too large, larger than available interstitial spaces, they will not fit into the smaller interstitial spaces, thus displacing the continuous reinforcing fibers. This results in lower composite fiber volume fraction, compromised mechanical properties, and lower thermal conductivity throughout the PMC.

What is needed is a PMC resin mixture for the outer shell of a composite gun barrel that is workable for manufacturing, that when cured withstands high operating temperatures and/or more effectively transfers to the ambient atmosphere the heat generated by rapid or prolonged firing of a gun, and that is light, stiff and strong.

### BRIEF SUMMARY OF THE INVENTION

According to one aspect of the invention there is provided a barrel for directing the path of a dischargeable projectile according to claim 1. The barrel includes an inner liner defining an axial bore and an outer shell surrounding and in direct contact with the inner liner, said outer shell is fabricated from a PMC comprising a resin mixture and fibers. The outer shell accommodates higher temperature operation. According to the invention heat conduction through the PMC is facilitated by including a thermal conductive additive in the resin mixture, comprising generally spherical metallic particles between about 0.1 microns and 10.0 microns in diameter. In one embodiment, said resin mixture has a fully cured glass transition temperature, T_{g}, greater than 260° C (500° F).

It is to be understood that the invention may be practiced with many makes and models of projectile barrels with comparable effectiveness, and on other structures where fiber is combined with a resin and wound or otherwise constructed around along an elongated axis.

### BRIEF DESCRIPTION OF THE SEVERAL VIEWS OF THE DRAWINGS

These and other features and advantages of the present invention will become more readily appreciated when considered in connection with the following detailed description and appended drawings, wherein:
Figure 1 illustrates a rifle fitted with a composite barrel;
Figure 1A is a cut-away of a portion of the composite barrel shown in Fig. 1;
Figure 2 illustrates a resin tow winding system;
Figure 3 illustrates a dry towpreg winding system;
Figure 4 is a cut-away illustration showing an embodiment of a composite barrel; and
Figure 5 is a greatly magnified view of a sectional cut through an exemplar polymer matrix composite.

### DETAILED DESCRIPTION OF THE INVENTION

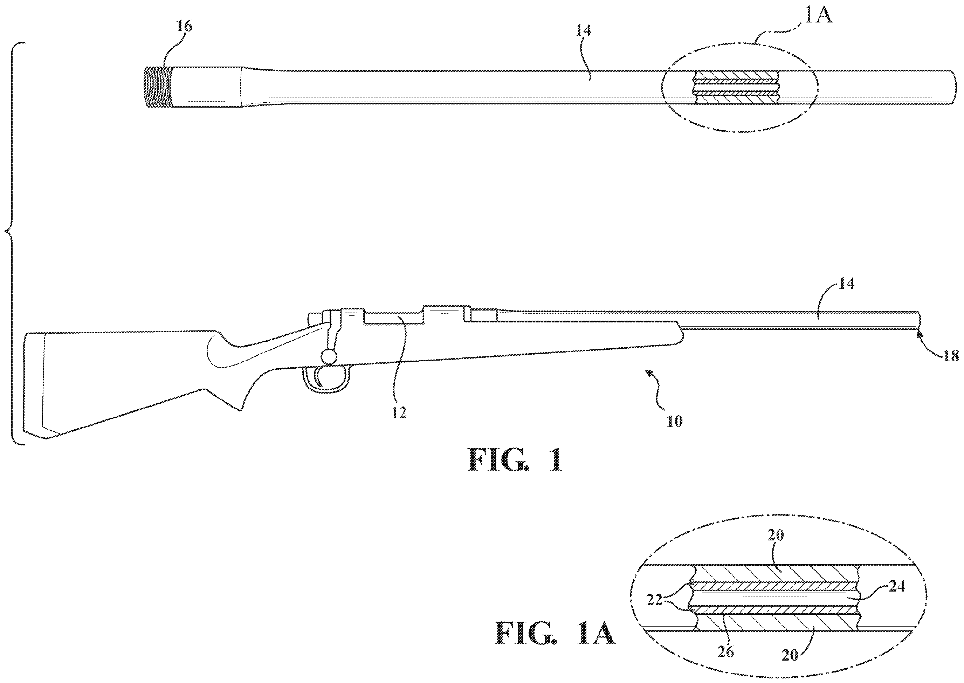

Referring to the figures, wherein like numerals indicate like or corresponding parts throughout the several views, Figure 1 shows a bolt action rifle 10 fitted with a receiver 12, stock, trigger, barrel 14, and other familiar features. In the embodiment shown, barrel 14 securely engages with receiver 12 by means of threads 16. In operation, a cartridge of ammunition is inserted into the receiver. The cartridge has a base portion containing a gunpowder charge and dischargeable projectile, *i.e.,* a bullet. When a shooter pulls the trigger, a firing pin strikes the base of the cartridge, igniting the gunpowder charge and causing the bullet to discharge through axial bore 24 and out of the muzzle 18.

As shown in Fig. 1A, barrel 14 is comprised of an inner liner 22 and an outer shell 20. In one embodiment, inner liner 22 is made of a metal, such as a steel alloy. A metal inner liner, such as stainless steel, facilitates fabrication of rifling lands and grooves along axial bore 24 as well as threads at the muzzle and/or breech ends of the barrel. The inner liner may also be a nonmetallic material such as a ceramic or a polymer-based material. Outer shell 20 is a cured polymer matrix composite (PMC) comprised of carbon fiber and a resin mixture as described more fully below. Inner liner 22 need not be uniformly cylindrical. For example, inner liner 22 may radially expand at the breech end to accommodate cutting of threads 16 for insertion into receiver 12, taper outwards at the muzzle 18, or include other configurations depending on desired features of the gun. Outer shell 20 likewise may include non-cylindrical features or be discontinuous over the length of barrel 14.

Outer shell 20 is in direct contact with inner liner 22 at interface 26. It may be desirable to promote adhesion or to inhibit corrosion between the inner liner 22 and PMC outer shell 20 at interface 26. For purposes of this specification and the claims, "direct contact" means that the outer surface of inner liner 22 at interface 26 may include a surface treatment that is applied before outer shell 20 is fabricated upon inner liner 22. For example, a PMC outer shell 20 is in "direct contact" with a steel inner liner 22 at interface 26 even if the steel liner's surface is electroplated, anodized, or coated with a chemical compound or mixture, such as paint, resin or other substance.

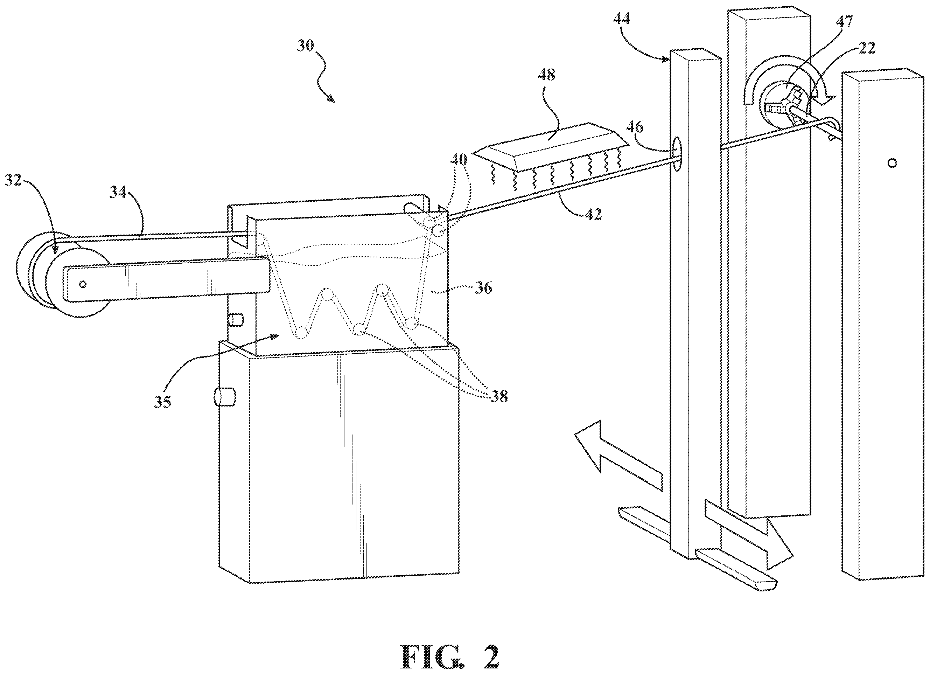

Figure 2 shows a simplified tow winding system 30 useful for fabricating a composite gun barrel 14 having a PMC outer shell 20. In one embodiment, outer shell 20 comprises continuous fiber filament, or tow, 34, supplied from tow spool 32. In another embodiment (not shown) the fiber could be in the form of fabric or a weave. Carbon fibers are typically advantageous to use for PMC gun barrels due to their high stiffness, high strength, and low density. The term "carbon fiber" is used to generically describe carbon and graphite fibers irrespective of their manufacturing process or precursor materials, and specifically includes both PAN precursor and pitch precursor carbon fibers. In one embodiment, tow 34 is PAN carbon fiber filament tow, such as HexTow IM2A available from Hexcel Corporation, Stamford Connecticut. However, tow 34 could also be a pitch carbon fiber, such as GRANOC CN-60-A2S, available from Nippon Graphite Fiber Corporation, Tokyo, Japan, or any suitable fiber for manufacturing composites including Kevlar, glass, quartz, ceramic, mineral, carbon, metallic, graphite, or hybridizations of fibers formed by combining different types of fibers to gain characteristics not attainable with a single reinforcing fiber.

Tow 34 is drawn from tow spool 32 under tension by rotating inner liner 22 which functions as a mandrel. Inner liner 22 is placed between chucks 47 and rotates about axial bore 24. The rotating inner liner 22 tugs tow 34 through a resin mixture 36, dipping around a series of rollers 38 immersed in resin bath 35, with the rollers 38 helping to press resin mixture 36 into tow 34. Those skilled in the art will appreciate that there are multiple ways of applying resin to the tow. In another embodiment (not shown), tow 34 could be drawn across the upper surface of a semi-immersed rotating drum wetted with resin.

Brisk movement of tow 34 through resin mixture 36 and around rollers 38 creates currents and turbulence helping to maintain resin solids and other particulates in suspension within resin mixture 36. Optionally, an agitator (not shown) placed in resin bath 35 may be utilized to facilitate uniform mix and viscosity of the resin, solvent, and any added particulates or other thermally conductive materials added as solids to the resin mixture 36. The agitator may be a mechanical paddle driven by a motor, a resin mixture recirculation system driven by a pump, an ultrasonic agitator, or other means for maintaining solids and particulates in suspension.

After the filament is impregnated with the resin mixture 36, excess resin mixture is removed from the tow. Excess resin mixture may be removed from the tow by means of nip rollers 40 having an appropriate gap setting, scrapers (not shown), appropriately-sized dies (not shown) and/or other means known in the art, individually or in combination.

Resin infused tow 42 exits resin bath 35 and is drawn through a filament guide orifice 46 controlled by filament guide structure 44. Optionally, one or more heating elements 48 may flash off first stage volatiles present in resin mixture 36 after the resin infused tow 42 exits resin bath 35 by means of a heat unit 48. The heating units cause volatilization of some or even most of any solvent that is present on resin infused tow 42. The heating elements 48 may be placed anywhere on the path of resin infused tow 42, including heating the mandrel inner liner 22 itself. The heating elements may be radiant heaters, tube furnace/heaters, convection heaters, or other means of heating resin infused tow 42, including various types of heating elements in combination.

After the excess resin mixture 36 is mechanically removed and optionally subjected to heating, resin infused tow 42 is wound around the inner barrel in the desired helical pattern and to a desired diameter. Filament guide structure 44 includes a mechanism for moving filament guide orifice 46 in a lateral motion generally parallel to axial bore 24, thereby guiding resin infused tow 42 back and forth along rotating inner liner 22, so that resin infused tow 42 is applied to inner liner in a helical winding pattern. Filament guide orifice 46 itself may also rotate or translate relative to filament guide structure 44.

It will be appreciated that if inner liner 22 rotates at a constant rate, faster lateral movement of filament guiding structure 44 will result in a helical winding pattern of resin infused tow 42 characterized by smaller winding angles relative to axial bore 24. At a brisk lateral speed, the helical winding angle of resin infused tow will be small, nearly longitudinal relative to axial bore 24. Conversely, slower lateral movement of filament guiding structure 44 will result in larger helical winding angles relative to axial bore 24. At very slow lateral speeds, winding angles of resin infused tow 42 may be nearly circumferential hoops, almost 90 degrees. For purposes of the claims and this specification, such nearly circumferential hoops are nevertheless "helical." Tow winding system 30 may be controlled by a computer processor, so that rotation speed of the inner liner 22, lateral movement of the filament guide structure 44, movements of filament guide orifice 46, tension applied to tow 34, and other aspects may be programmed by a user to produce desired patterns and sequences of winding angles, number of layers, and depths of the layers. Such systems are available from, for example, McLean Anderson, 300 Ross Avenue, Schofield, Wisconsin 54476.

In a preferred embodiment, resin mixture 36 comprises a thermoset PMR polyimide resin. However, currently available polyimide resins are too viscous at room temperature, without excess solvent addition, to coat tow 34 satisfactorily. Further, resin solids or other components such as particulates may separate within resin mixture 36. Additional measures, such as heating or solvating resin mixture 36, are thus required to reduce viscosity and ensure satisfactory impregnation of tow 34.

Resin bath 35 may be configured to heat resin mixture 36 using techniques known to those skilled in the art, such as circulating a hot fluid, such as water, through a jacket surrounding resin bath 35, or applying heating elements to the bottom or sides of resin bath 35, or via a heating coil immersed in resin mixture 36. Resin mixture 36 comprising a thermoset polyimide resin may be heated up to about 93° C (200° F), the precise temperature being dependent on the characteristics of the resin and the volatility of the solvent used, with somewhat lower temperatures preferred. Higher temperatures make resin mixture 36 less viscous, enabling better impregnation and more uniform winding, but accelerate solvent loss and may accelerate premature cure reactions in the polyimide resin (*e.g.,* imidization) thereby reducing "pot life" of the resin.

Resin mixture 36 preferably comprises a solvent. Many solvents may be utilized to make the polyimide resin less viscous, including alcohols, aprotic solvents, and mixtures thereof. The PMR polyimide resin will typically include an alcohol co-reactant that acts as a solvent. A solvent having a lower boiling point (*i.e.,* higher volatility) is generally more desirable because it can be more easily flashed off the resin infused tow 42 with heating units such as a heat unit 48. Methanol and ethanol are preferred solvents. The inventors have determined that heating P²SI 635LM PMR polyimide resin mixture 36 to about 40° C to 60° C in resin bath 35, and adding methanol solvent to reduce the viscosity of resin mixture 36 to about 1000 cP, yields good resin impregnation and uniform filament winding operations. It is possible to achieve lower viscosity and better handling characteristics by adding more solvent. However, too much solvent will result in insufficient resin solids in resin mixture 36 to adequately impregnate a carbon fiber tow 34 with resin. Using too high of a temperature to reduce the resin viscosity results in undesirable side-reactions that reduce the cured thermal and mechanical properties of the polyimide polymer matrix.

A solvent such as methanol in resin mixture 36 has a lower boiling point than the polyimide resin. It is preferable to flash off much or most of the solvent on resin infused tow 42 before it is covered by subsequent windings of tow. As discussed above, heating means may include one or more radiant heaters 48, tube heaters, convective heaters, conductive heat originating from a heated mandrel, or other heating means. In one embodiment, a tube heater surrounds resin infused tow 42 and blows air heated to about 149° C (300° F) along the tow, directed back towards resin bath 35, and a radiant heater directs heat upon rotating inner liner 22.

Rather than drawing a tow through wet resin, a dry towpreg (*i.e.,* fiber that has been previously coated and/or impregnated with a resin having a high glass transition temperature) may be wrapped on the rotating inner liner 22 then dry-cured with heat and/or pressure. Imidized towpreg may be fabricated by first processing a polyimide resin to a partially-cured state in the following manner. A polymerizable monomeric polyimide resin is heated to about 149-260° C (300-500° F) for between about 30 minutes to four hours to imidize the resin so that oligomers form, having reactive endcaps. Preferably, the heat is withdrawn and the resin is cooled before the functional endcapping agents on the oligomers commence significant reacting and cross linking. The imidized polyimide resin, being now in solid form, may then be ground into a fine powder. This powder may then be electrostatically coated on a fiber or split tape, then optionally thermally fused to the fiber or tape before re-spooling.

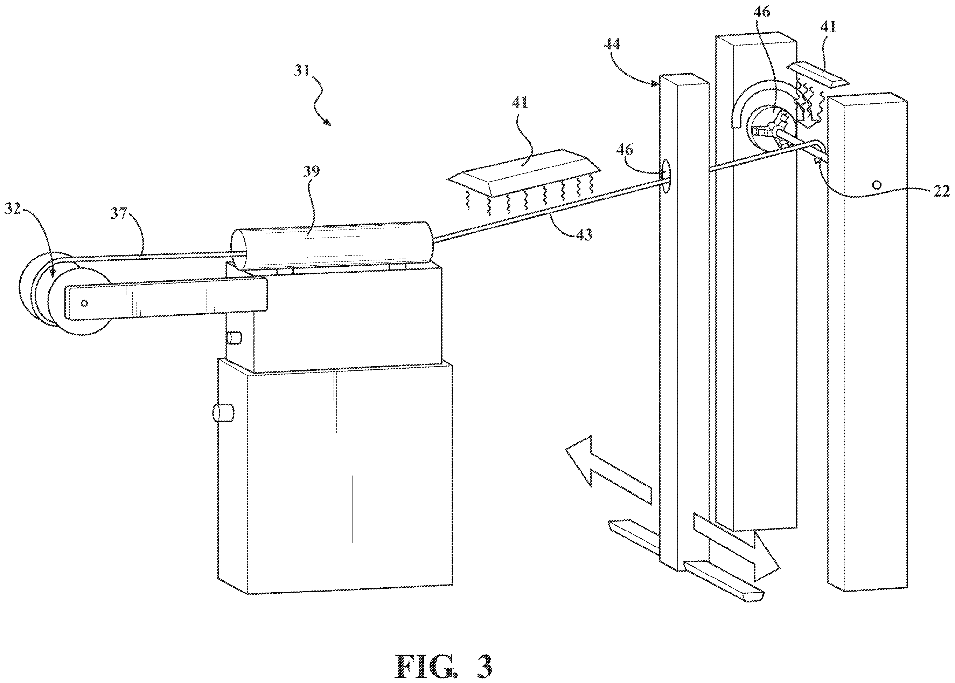

Figure 3 shows a towpreg winding system similar to the tow winding system of Figure 2. A fiber spool 32 carries a supply of partially cured towpreg 37 prepared as described immediately above. Instead of a resin bath, the towpreg is heated prior to and/or during application to rotating inner liner 22 in order to soften the partially cured polyimide resin previously incorporated into towpreg 37 thus allowing it to flow and facilitate consolidation. Figure 3 shows several variants of possible heating techniques, including a tube heater 39 and radiant heaters 41. Other heat sources include infrared heaters, hot air jets, and laser heating. Both the towpreg and the rotating inner liner 22 may be heated above the melting point of the polymer to achieve melt/melt contact between the towpreg and the inner liner. The rotating inner liner 22 may be heated, for example, by a radiant heater 41 and/or by a cartridge heater (not shown) placed within axial bore 24. Any of the foregoing heater types, alone or in combination, may be used to heat the towpreg and/or inner liner so that the towpreg achieves good melt contact with the inner liner. The softened and heated towpreg 43 is wound around inner liner 22 in a fashion similar to that described for the wet resin tow winding system described above.

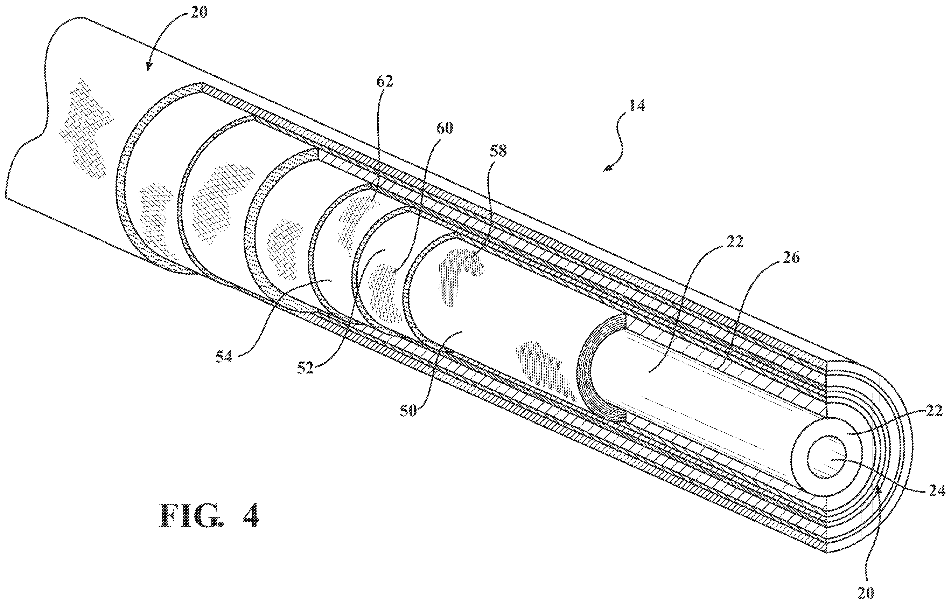

Figure 4 shows an exemplar barrel 14 produced by the winding system described, comprising a PMC outer shell 20 progressively cut away to reveal a plurality of winding layers created by winding resin infused tow 42 (or heated towpreg 43) around inner liner 22. In the embodiment illustrated, each winding layer has a different helical wrapping angle. First layer 50 has a first wrapping angle 58, second layer 52 has a second wrapping angle 60, and third layer 54 has a third wrapping angle 62. The number of layers may be any number, and the winding angles and depth of each layer may likewise vary.

In another embodiment, resin mixture 36 (or the dry partially cured towpreg 37) also comprises particles of a thermally conductive additive. Due to its combination of relatively low density, higher thermal conductivity, cost, and other superior attributes within the cured PMC, metal is a preferred thermal conductive additive material, and more preferably aluminum.

As noted above, adding significant quantities of thermal conducting additive adversely increases viscosity of resin mixture 36. For example, graphene platelets exhibit excellent thermal conductivity but tend to make resin mixture unacceptably viscous. Graphene platelets might have an area (X-Y dimension) between 1 and 50 micrometers (µm) but a thickness of only about 50-100 nanometers (nm), yielding an aspect ratio approaching 1000:1. Particles having such high aspect ratios exacerbate the viscosity issues afflicting polyimide resins discussed above. The inventors have determined that rather than focusing on additive materials having the best thermal conductivity, an alternate approach is to employ a material that allows maximization of additive volume versus additive surface area. This approach suggests the additive particles should be approximately spherical.

In one embodiment, the additive particles are metal and have generally spherical shape. The metal spheres comprise approximately 0.2% to 50% by weight of resin mixture 36 (about 0.1% to 25% by volume). In another embodiment, the additive particles are themselves comprised of two or more sizes in order to more efficiently increase the thermal conductivity of the composite with minimal effect on processing characteristics. Having at least two sizes of thermally conductive particles in resin mixture 36 improves particle packing within the interstitial spaces with less impact on the resin viscosity and consequently improves heat transfer characteristics while keeping viscosity manageable.

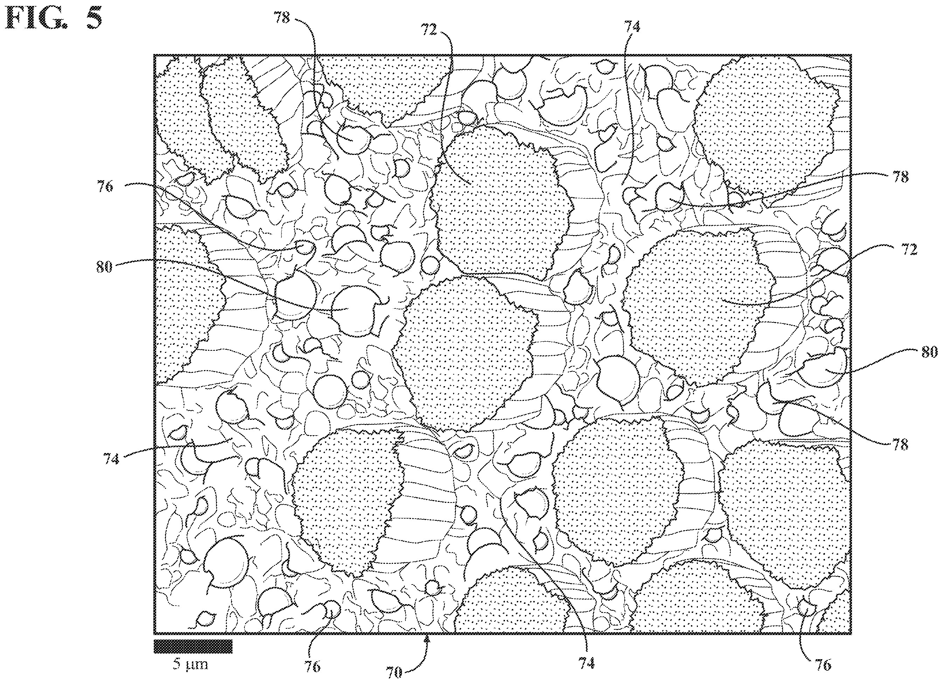

Figure 5 shows a greatly magnified cross sectional view of one embodiment of a cured polymer matrix composite 70. Polymer matrix composite 70 could be produced either by wet winding resin or by winding partially cured resin previously applied to towpreg. Figure 5 shows cut ends of individual fiber strands/filaments 72 arranged generally parallel to each other and surrounded by cured resin 74. Resin 74 occupies the spaces between fiber strands 72. The individual fiber strands are generally parallel and are approximately 3 to 15 microns (µm) in diameter. The interstitial spaces may range from about 1 micron to about 50 microns. In one embodiment, a variety of sizes of thermal conducting additive particles, preferably spherical metal particles, are distributed in interstitial spaces within the resin 74 and fiber strands 72 and in the interstitial spaces within resin 74.

In the embodiment shown, fiber strands 72 are approximately 7 µm in diameter and the thermal conducting additive comprises three sizes of approximately spherical aluminum particles, the smallest particles 76 being about 0.1 - 1 µm in diameter, the medium particles 78 being about 1-3 µm in diameter, and the large particles 80 being about 3-4 µm in diameter. These particle sizes can vary depending, for example, on the size of the fibers. For example, the largest particles could measure 10 µm. Most of the additive consists of small particles 76 and medium particles 78; a significantly smaller fraction is large particles 80. By formulating and distributing the thermal conductive additive in such fashion, many of the particles will be in close proximity or even touching each other, and preferably in close proximity and/or touching adjacent fiber tows 72, with the larger particles tending to occupy the larger interstitial spaces and the smaller particles occupying the smaller voids, which voids were formerly occupied by the solvent or volatile fraction of resin mixture 36 that was volatilized in the curing process. The thermal conducting additive particles have higher thermal conductivity than resin 74, thereby making the PMC more thermally conductive. On average, the plurality of sizes of thermally conductive additive spheres occupy a higher volume fraction of the interstitial space otherwise present in the PMC, leading to higher thermal conductivity of outer shell 20.

After winding wet resin tow 42 or heated towpreg 43, the composite barrel 14 is removed from the chucks 47 and subjected to heat and/or pressure to completely cure the thermoset polyimide resin. For wet resin systems, depending on the amount of volatiles present prior to commencing the cure process, a complete cure might require removing about 15% of the mass of the freshly wound PMC structure. It is generally better to remove the volatiles earlier in the curing process to minimize formation of voids in the matrix.

Regardless of whether the tow is wound on inner liner 22 wet or dry, it is more difficult to cure structures incorporating polyimide resins than common epoxy-based resins. In wet resin applications particularly, it is difficult to remove volatiles from the fiber resin matrix without creating voids. When a polyimide resin is used with flat or large-radius panels, volatile transport is easier because volatiles can escape to the open edges of the surface, and/or more readily migrate between fabric layers. In filament winding applications, however, these gasses can be trapped between the continual windings.

Voids in the PMC have the undesirable effects of reducing strength, stiffness, and thermal conductivity. Satisfactory results are even more difficult to achieve when curing an item produced by filament winding, in contrast to curing flat impregnated fabric sheets. The impervious inner liner 22 forces volatiles to migrate radially outward through a plurality of densely wound layers (with a much smaller portion of volatiles migrating to the breech and muzzle 18 of barrel 14). The curing problem may be compounded still further when thermally conductive additives are present in resin mixture 36.

A cured outer shell 22 according to one embodiment is produced by first providing a freshly wound barrel incorporating PAN carbon fibers and a resin mixture 36 comprising P²SI 635LM polyimide resin and about 40% concentration by weight of generally spherical aluminum particles between 1 and 5 microns. Such a resin mixture 36 has a glass transition temperature of about 335° C (635° F) after cure. The wet fiber tows 42 are passed through a tube heater as described above then wound around an inner liner 22 using the wet-resin system depicted in Figure 2 to generate a plurality of winding layers at a plurality of winding angles. The freshly wound barrel is then placed in an oven or autoclave and cured in a series of stages.

In a first stage, the temperature in the autoclave is gradually raised, over about 5 to 10 hours, to about 177° C (350° F). To assist in volatile transport out of the PMC, vacuum may be applied to barrel 14 during this stage. In a second stage, the oven or autoclave temperature is increased to about 260-280° C (500-536° F) for between 2 and 8 hours to imidize the PMR polyimide resin mixture solution to form oligomers having reactive endcaps. At this stage, all volatiles re essentially removed from the composite shell and the functional endcapping agents on the oligomers may start reacting and cross linking. During this second stage of the cure, pressure of between 10 and 400 psi, preferably about 200 psi, is applied to facilitate consolidation. In a third stage, the temperature within the oven or autoclave is raised even further to about 316-371° C (600-700°F), preferably for at least four hours, to accomplish a final cure, *i.e.,* substantially completing cross-linking of the imidized polyimides by reacting the endcapping agents and stabilizing the carbon-fiber/resin mixture matrix. The total curing time within the oven or autoclave is preferably 14-24 hours. The autoclave may remain pressurized during the second and third stages.

Following cooling, the cured barrel 14 is placed on a lathe and ground down to desired finish diameter with one or more abrasive tools such as diamond-coated grinding and polishing wheels. For purposes of the claims and this specification, "surrounding and in direct contact with the inner liner" means that outer shell 20 surrounds and is in direct contact with inner liner 22 along at least a portion of the axial length of barrel 14; parts of inner liner 22 may be exposed, for example, at muzzle 18, threads 16, or any other desired location(s) on barrel 14.

The PMC embodiments described above include thermoset polyimide resin mixtures having glass transition temperature greater than 260° C (500° F), allowing for hotter operation of barrel 14. Such resins demonstrate superior thermal stability compared to epoxy-based resin mixtures, which typically undergo glass transition around 60-204° C (140-400° F) and have relatively lower thermal stability. Not only is the structure of barrel 14 better able to withstand higher temperatures, but an additional benefit is that the higher operating temperature facilitates heat transfer from metal liner 22 to the ambient atmosphere, due to a higher temperature difference between the external surface of outer shell 20 and the atmosphere.

The foregoing invention has been described in accordance with the relevant legal standards, thus the description is exemplary rather than limiting in nature. Variations and modifications to the disclosed embodiment may become apparent to those skilled in the art and fall within the scope of the invention.

## Claims

1. A barrel (14) for directing the path of a dischargeable projectile, comprising:
an inner liner (22) defining an axial bore (24); and
an outer shell (20) surrounding and in direct contact with the inner liner (22), said outer shell (20) fabricated from a polymer matrix composite (PMC), said PMC comprising a resin mixture and fibers, **characterized by** said resin mixture comprising generally spherical metallic particles (76, 78, 80), said metallic particles comprising a plurality of sizes between about 0.1 microns and 10.0 microns in diameter.

2. The barrel of claim 1, wherein said metallic particles are aluminum.

3. The barrel of claim 1 or 2, wherein the resin mixture comprise a polyimide resin.

4. A firearm comprising a receiver, a stock connected to the receiver, and a barrel (14) according to any one of the preceding claims connected to the receiver, wherein the resin mixture comprises a polyimide resin mixture having a glass transition temperature greater than 260° C, the fibers comprise carbon fiber tows helically wound around the inner liner (22) in a plurality of layers, said plurality of layers includes a plurality of winding angles relative to the axial bore.

5. The firearm of claim 4, wherein said inner liner (22) comprises a steel alloy.

## Patentansprüche

1. Lauf (14) zum Lenken der Strecke eines auslösbaren Geschosses, umfassend:
eine Innenverkleidung (22), die ein Axialloch (24) definiert; und
eine Außenhülle (20), die die Innenverkleidung (22) umgibt und in direktem Kontakt zu ihr steht, wobei die Außenhülle (20) aus einem Polymermatrixverbund (PMC) hergestellt ist, wobei der PMC eine Harzmischung und Fasern umfasst, **dadurch gekennzeichnet, dass** die Harzmischung allgemein kugelförmige metallische Partikel (76, 78, 80) umfasst, wobei die metallischen Partikel eine Vielzahl von Größen zwischen etwa 0,1 Mikron und 10,0 Mikron im Durchmesser umfassen.

2. Lauf nach Anspruch 1, wobei die metallischen Partikel Aluminium sind.

3. Lauf nach Anspruch 1 oder 2, wobei die Harzmischung ein Polyimidharz umfasst.

4. Schusswaffe, umfassend einen Rahmen, einen mit dem Rahmen verbundenen Schaft und einen Lauf (14) nach einem der vorstehenden Ansprüche, der mit dem Rahmen verbunden ist, wobei das Harzgemisch eine Polyimidharzmischung mit einer Glasübergangstemperatur von mehr als 260°C umfasst, wobei die Fasern Carbonfaserstränge umfassen, die in einer Vielzahl von Schichten spiralförmig um die Innenverkleidung (22) gewickelt sind, wobei die Vielzahl von Schichten eine Vielzahl von Wicklungswinkeln relativ zum Axialloch umfasst.

5. Schusswaffe nach Anspruch 4, wobei die Innenverkleidung (22) eine Stahllegierung umfasst.

## Revendications

1. Fût (14) destiné à diriger la trajectoire d'un projectile déchargeable, comprenant :
un chemisage interne (22) définissant un alésage axial (24) ; et
une enveloppe externe (20) entourant le chemisage interne (22) et étant en contact direct avec celui-ci, ladite enveloppe externe (20) étant fabriquée à partir d'un composite à matrice polymère (PMC), ledit PMC comprenant un mélange de résine et de fibres, **caractérisé par** ledit mélange de résine comprenant des particules métalliques généralement sphériques (76, 78, 80), lesdites particules métalliques comprenant une pluralité de tailles comprises entre environ 0,1 microns et 10,0 microns de diamètre.

2. Fût selon la revendication 1, lesdites particules métalliques étant en aluminium.

3. Fût selon la revendication 1 ou 2, ledit mélange de résine comprenant une résine polyimide.

4. Arme à feu comprenant un récepteur, un stock raccordé au récepteur et un fût (14) selon l'une quelconque des revendications précédentes relié au récepteur, ledit mélange de résine comprenant un mélange de résine polyimide possédant une température de transition vitreuse supérieure à 260°C, lesdites fibres comprenant des étoupes de fibre de carbone enroulées hélicoïdalement autour du chemisage interne (22) dans une pluralité de couches, ladite pluralité de couches comprenant une pluralité de d'angles d'enroulement par rapport à l'alésage axial.

5. Arme à feu selon la revendication 4, ledit chemisage interne (22) comprenant un alliage d'acier.
